# EUROPEAN PATENT APPLICATION

(11) **EP 1 884 900 A1**
(43) Date of publication of application: **06.02.2008**
(21) Application number: 06425547.4
(22) Date of filing: 31.07.2006
(51) Int. Cl.: G07C 9/00, B60R 25/00, B60R 25/04

(54) **Apparatus for remotely activating/deactivating security systems for vehicles**

(71) Applicant: Cobra Automotive Technologies S.P.A., 21100 Varese (IT)
(72) Inventor: Memmola, Serafino, 21020 Casciago (Varese) (IT)
(74) Representative: Baroni, Matteo

(57) **Abstract**

An apparatus for remotely activating/deactivating security systems for vehicles, comprising a transmitter (10) provided with a module (20) for generation of a main signal (100) including a succession of time- and amplitude-modulated pulses (100a), and transmission means (30) connected to said generation module (20) to send said main signal (100) to a security system of a vehicle to activate/deactivate said system. The apparatus (1) further comprises a receiver (50) adapted to co-operate with said transmitter (10) for activation/deactivation of said security system.

## Description

The present invention relates to an apparatus for remotely activating/deactivating security systems for vehicles; the invention further relates to a transmitter and a receiver being part of said apparatus.

It is known that, in order to stop vehicle thefts or at least reduce the number of said thefts, vehicles such as cars, motorcycles, lorries, trucks and full trailers, for example, are generally provided with security systems that, in the absence of a precise identification of the proprietor or operators authorised to use the vehicle, either do not allow access and/or ignition of said vehicles or reduce the possibility of use of same to a great extent, so as to force the perpetrator of a possible theft to leave the vehicle itself in an area not far from that where the vehicle initially was.

Identification of those authorised to use the vehicle can be carried out through a key or a remote control that, due to its outer conformation and the contents of the transmitted signals respectively, enable legitimate access to the vehicle associated therewith and correct use of same.

In order to facilitate the identification operation, above all in the case of motor-vehicles, transmitters known under the name of "driver cards" are presently available, which are designed to periodically (once every three-four seconds, for example) emit an identification signal; in this way, when the user holding his/her driver card in his/her hand or pocket comes close to the vehicle, the security system (an ignition inhibiting system, for example) detects this identification signal and deactivates the previously put on inhibiting system, without the user being obliged to perform any particular operation.

The main drawback detected with reference to these systems consists in that the identification signal that is continuously emitted can be easily recorded, even with the most normal pocket recorders, to be then reproduced close to the vehicle, so as to deactivate the security locking systems previously put on and thus make the vehicle also accessible to, and usable by unauthorised individuals.

These recording and reproduction operations are very efficient and easy to be carried out, because they pay no attention to decrypting of possibly enciphered signals and only supply the receiver with an access code that the receiver itself "is expecting", without the true contents of said signals being decoded and interpreted.

Accordingly, it is an aim of the present invention to make available an apparatus for remotely activating/deactivating security systems for vehicles that is able to reduce the ease with which the identification signal can be recorded and reused, thus improving the overall security of the system.

It is a further aim of the invention to provide an apparatus having a simple and cheap structure and for use of which the user is not required to perform complicated or uncomfortable operations.

The foregoing and further aims are substantially achieved by an apparatus for remotely activating/deactivating security systems for vehicles in accordance with the features described in the appended claims.

Further features and advantages will become more apparent from the detailed description of a preferred but not exclusive embodiment of the invention. This description will be taken hereinafter with reference to the accompanying drawings, given by way of non-limiting example, in which:
- Fig. 1 shows a possible coding used in the apparatus of the invention;
- Fig. 2 diagrammatically shows the structure of a signal generated by the apparatus of the invention;
- Fig. 3 shows a block diagram of a transmitter of the apparatus of the invention;
- Fig. 4 shows a block diagram of a receiver of the apparatus of the invention adapted to co-operate with the transmitter seen in Fig. 3.

With reference to the figures, an apparatus for remotely activating/deactivating security systems for vehicles has been generally identified by reference numeral 1.

Apparatus 1 can apply to any type of vehicles, such as cars, motor-vehicles, lorries, etc.

Apparatus 1 comprises a transmitter 10 and a receiver 50. The transmitter 10 can be made like a conventional remote control for example, or in any other form that can enable easy holding of same by a user (in a pocket, in his/her hand, etc.).

The transmitter 10 generally aims at enabling recognition or identification of the proprietor (or generally a user authorised to employ the transport means) by the vehicle and the security system associated therewith, so that the security system is automatically deactivated and the vehicle can be used in a correct manner.

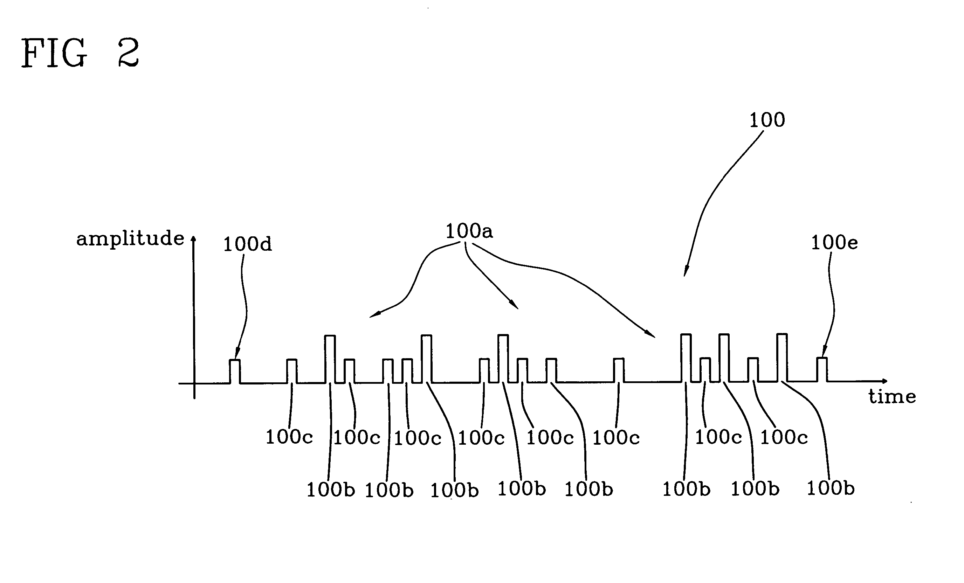

Transmitter 10 first of all comprises a module 20 for generation of a main signal 100, which signal comprises a succession of time- and amplitude-modulated pulses 100a (Fig. 2). In other words, the main signal 100 is representative of predetermined information that is coded both through time distribution of the pulses and through the pulse amplitude. Practically, time modulation of the pulses consists in spacing each pulse from the preceding and/or the following one in time, depending on the information to be transmitted.

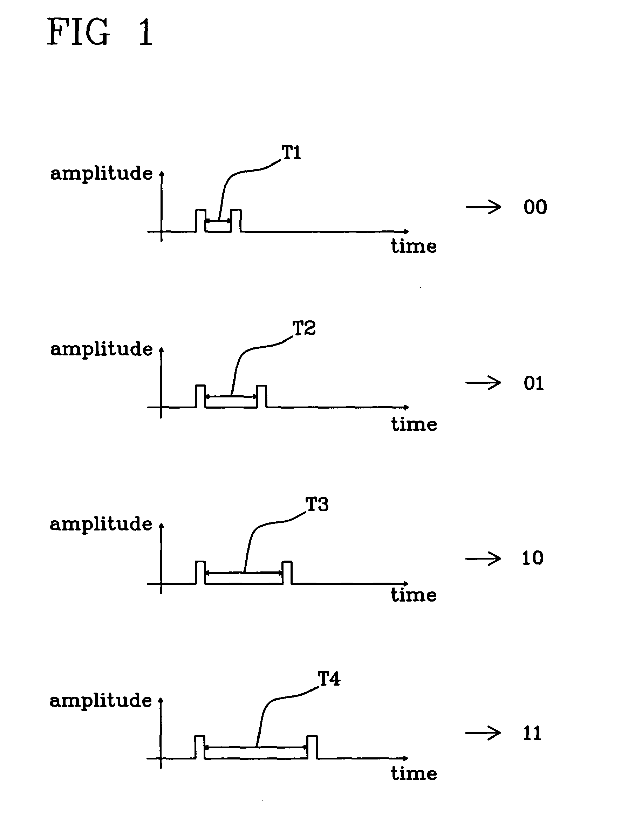

Fig. 1 shows, by way of example, how the binary values 00, 01, 10 and 11 can be coded through suitable time intervals T1, T2, T3, T4 between successive pulses.

Preferably, the time-modulated pulses have all the same duration, in particular included between 250µs and 350µs, and equal to 300µs, for example.

Preferably, the time intervals T2, T3, T4 are multiples of the smallest time interval T1; for instance, T1 can be equal to 200µs, while the time intervals T2, T3 and T4 can be equal to 400µs, 600µs and 800µs, respectively.

As above mentioned, the main signal 100 is also modulated in amplitude. Preferably, only part of the pulses 100a of the main signal 100 is amplitude-modulated; this means that some pulses of the main signal 100 contain information represented by the time interval separating them from the other pulses, while other pulses (still of the main signal 100) contain information represented by their amplitude.

Preferably, the amplitude-modulated pulses 100b are alternated with amplitude-unmodulated pulses 100c. In particular, the amplitude-modulated pulses 100b can be also used for time modulation, so as to carry information both by virtue of their amplitude and by virtue of the time interval separating them from the other pulses. In this way, the power used to transmit all the desired information can be minimised.

In a preferred embodiment (Fig. 2), the odd pulses are modulated only in time, while the even pulses are modulated both in time and amplitude.

Preferably, the amplitude modulation is carried out following at least two non-zero amplitude (i.e. power) levels; the ratio between the smallest amplitude and the greatest amplitude can be included between 0.3 and 0.7 and can be equal to 0.5, for example.

In terms of power, in a ratio equal to 0.5, the greatest amplitude can correspond to a power of -32dBm, while the smallest amplitude can correspond to -38dBm.

Preferably the amplitude-modulated pulses 100b all have the same duration in particular included between 250µs and 350µs and equal to 300µs, for example.

In the preferred embodiment, both the amplitude-modulated pulses 100b and the amplitude-unmodulated pulses 100c have the same time duration, preferably included between 250µs and 350µs, and equal to 300µs, for example.

The main signal 100 may contain an identification code ID, preferably designed to identify the transmitter device 10 (i.e. the user authorised to accede to and use the vehicle). This identification code ID can be encrypted through a predetermined algorithm and one or more keys.

In the preferred embodiment two keys RN1, RN2 are used. A first key RN1 is represented by the amplitude modulation of said amplitude-modulated pulses 100b. A second key RN2 is transmitted in a plain form, within the main signal 100, so that the receiver device 50 can read it and carry out a correct decoding.

The transmitter 10 further comprises transmission means 30 connected to the generation module to send the main signal 100 to the receiver 50, so that the latter can activate and/or deactivate the security system mounted on board the vehicle.

Practically, the transmission means 30 can comprise an antenna that is suitably sized to send signals to the pre-established frequencies (for instance, 433,92 MHz or 315 MHz, depending on the available band in the Country in which apparatus 1 is used).

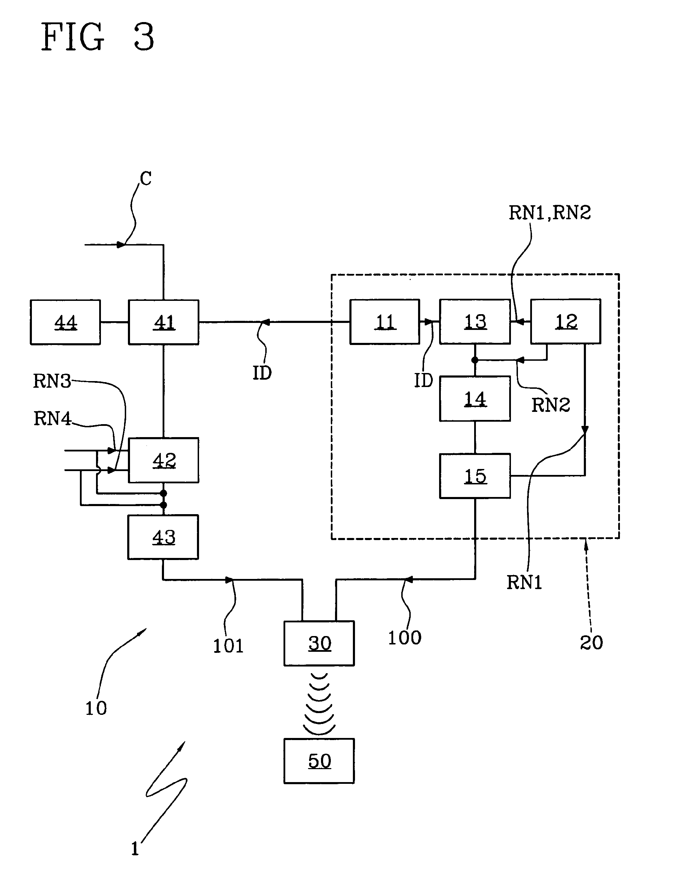

Fig. 3 shows a block diagram of an exemplary embodiment of the transmitter 10.

The identification code ID to be transmitted is stored into a storage register 11. A generator 12 of random numbers generates a first and a second random numbers defining the keys RN1, RN2 through which the identification code ID is encrypted. An encryption block 13 carries out said encryption according to a predetermined algorithm and said first and second keys RN1, RN2.

A first modulation block 14 carries out time modulation of the encrypted code, and a second modulation block 15 adds the amplitude modulation onto suitable selected pulses, so that the first key RN1 can be inserted in the main signal 100.

Preferably the second key RN2 is transmitted in a plain form together with the main signal 100; in particular the second key RN2 can be inserted between the encryption block 13 and the first modulation block 14.

In this way, as better described in the following, the receiver is able to retrieve the first and second keys RN1, RN2 and correctly carry out decrypting of the identification code ID and thus determine whether the user is enabled to the vehicle's use.

Preferably, the main signal 100 is continuously sent to a predetermined frequency, approximately once every three seconds, for example; in this manner, if the user is recognised, the vehicle's security system is advantageously deactivated while the user carrying the transmitter 10 on himself/herself is moving close to the vehicle.

The average duration of the "frame", i.e. of the contents of the main signal 100 inclusive of the second key RN2 transmitted in a plain form, is included between 10ms and 18ms, and can be equal to 14ms.

The transmitter 10 can be provided with a power unit (not shown) consisting of batteries for example, so as to supply the circuitry of transmitter 10 with the necessary electric power for correct operation.

Conveniently, the transmitter 10 is able to inform the receiver - to be described in the following - when said power unit is close to depletion.

To this aim it is provided that, under normal operating conditions, at least three pulses of the amplitude-modulated pulses have a greater amplitude than the others; should the batteries be close to depletion, the main signal 100 would be generated in such a manner as to contain only two pulses of greater amplitude. Under this circumstance the receiver 50 is provided to generate a suitable information signal to warn the user about a low-battery condition.

A second operating mode to enable operation of transmitter 10 contemplates generation of an auxiliary signal 101, alternative to the main signal 100, following a command C by the user pressing a key of the transmitter 10, for example.

Preferably the second operating mode (generation of the auxiliary signal 101) is always active and operable through said command C; on the contrary, the first operating mode (generation of the main signal 100) can be activated and deactivated by the operator to his/her personal discretion, to limit the battery consumption when deactivation of the vehicle's security system is not required, for example.

The auxiliary signal 101 too is representative of the identification code ID but, unlike the main signal 100, is not transmitted in a continuous manner, to a given frequency, but is generated and sent only once or a limited number of times, following the user's command C.

In more detail, the identification code ID, unchangeable in time, is combined with a code VC cyclically variable in time, through a combination block 41.

By way of example, an auxiliary storage register 44 of the transmitter 10 contains a predetermined number of values (64000 values, for example); following each command C entered by the user, one of said values is selected according to a determined sequence to be combined with the identification code ID and then transmitted to the receiver.

Consequently, the identification code ID is combined with the same value once every 64000 generation and transmission of an auxiliary signal occurs (clearly if the auxiliary storage register contains 64000 values).

The auxiliary signal 101 is preferably at least partly encrypted (encryption block 42), in particular according to a predetermined algorithm and through a pair of keys defined by a pair of random numbers RN3, RN4.

Said random numbers RN3, RN4 are generated by a suitable generator of random numbers that can be the same used for generation of the keys RN1, RN2 for the main signal 100, or can be a distinct functional module.

The keys RN3, RN4 are transmitted in a plain form together with the auxiliary signal 101, so that the receiver can read them and decode the encrypted part of the auxiliary signal containing the identification code ID.

Preferably, the auxiliary signal 101 only has a time modulation, i.e. a modulation in which the information is encoded through the time interval between pulses in succession. A modulator 43 is designed for the purpose.

Advantageously, these pulses have the same time duration, preferably included between 250µs and 350µs, and equal to 300µs, for example.

Advantageously these pulses have the same amplitude preferably included between -24dBm and -28dBm, and equal to -26dBm, for example.

It is to be noted that the selected amplitudes for the pulses used in the main signal 100 are smaller than that of the pulses of the auxiliary signal 101.

Preferably, the ratios of the amplitudes of the pulses of the main signal 100 to the amplitude of the pulses of the auxiliary signal 101 are included between 0.4 and 0.6 (for the greatest amplitude) and between 0.15 and 0.35 (for the smallest amplitude). For example, these ratios can be equal to 0.5 and 0.25, respectively.

The auxiliary signal 101 is sent to the receiver 50 by means of said transmission means 30.

Preferably the main signal 100 and auxiliary signal 101 comprise a starting pulse or "start bit" denoted at 100d in Fig. 2, relating to the main signal 100. The starting pulse has a different time duration, depending on whether the main signal 100 or the auxiliary signal 101 is concerned.

For example the starting pulse can have a duration of about 1ms when the main signal 100 is concerned or a duration of about 1.6ms if the auxiliary signal 101 is concerned.

The main signal 100 and auxiliary signal 101 are preferably ended with a final pulse denoted at 100e in Fig. 2, relating to the main signal 100.

As above mentioned, apparatus 1 further comprises a receiver 50 operatively associated with the security system mounted on board the vehicle.

This security system can be able to prevent or limit access to the vehicle and/or ignition of same; in addition or as an alternative, this system can warn the proprietor, by a signal of the sound type for example, in case of a non legitimate attempt to accede to or use the vehicle.

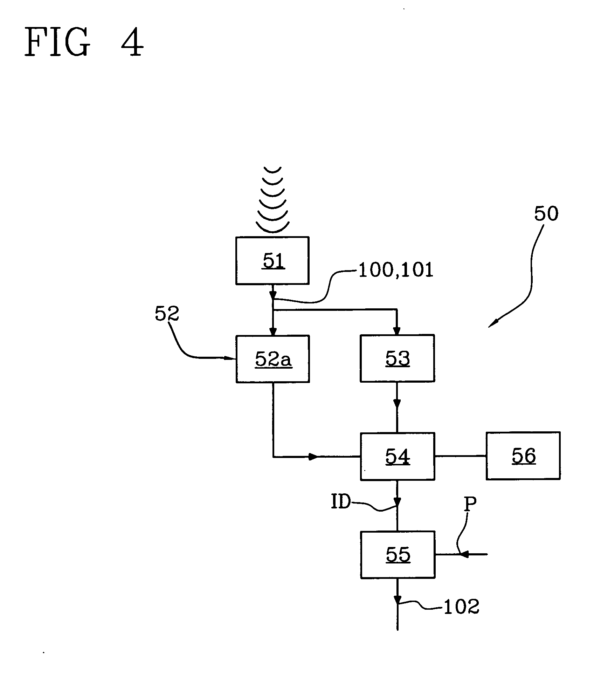

The receiver 50 (Fig. 4) first of all comprises reception means 51 to receive at least the main signal 100. The reception means 51 can practically comprise an antenna or an equivalent means adapted to receive the main signal 100.

The receiver 50 further comprises an amplitude demodulator 52 operatively associated with the reception means 51 to carry out amplitude demodulation of at least part of the main signal 100.

The receiver 50 further comprises a time demodulator 53 operatively associated with the reception means 51 and the amplitude demodulator 52 to retrieve the identification code ID incorporated into the main signal 100.

In more detail, the amplitude demodulator 52 is designed to retrieve the first key RN1, within the main signal 100. In fact, as above said, the first key RN1 is represented by the amplitude modulation of at least part of the main signal 100.

Preferably, only part of the pulses defining the main signal 100 is used to carry out an amplitude demodulation of same. In particular, the amplitude demodulator 52 may comprise selection means 52a to alternately select in said succession of pulses 100a, those pulses on which said amplitude demodulator 52 is active; once the sequence to be demodulated has been identified, the selection means 52a is for example designed to select the even pulses, within said sequence, so as to detect the amplitude of same and thus retrieve the first key RN1.

Preferably, the amplitude demodulator 52 recognises at least two non-zero amplitudes different from each other; for example the ratio between these amplitudes can be included, as described above, between 0.3 and 0.7.

Advantageously, the amplitude of each pulse on which the amplitude demodulator 52 is active is not compared with a predetermined threshold (for measurement of same), but with the amplitude of the preceding pulse, which is preferably amplitude-unmodulated and has a predetermined amplitude, for example equal to the smallest amplitude of those employed for amplitude modulation. In other words, the "preceding" pulse employed for comparison is not selected by the amplitude demodulator 52, which means that the amplitude of this pulse does not carry any information, but is only used as a term of comparison, exactly due to the fact that it is substantially constant and known a priori.

In this way, inaccuracies in determining the amplitudes of the amplitude-modulated pulses 100b due to variations in the distance between transmitter 10 and receiver 50 can be eliminated, as well as the respective power variations with which pulses 100a are received by the receiver 50 itself.

The time demodulator 53 is designed to detect the information represented by the time interval between the pulses 100a of the main signal 100, following the block diagram in Fig. 1, for example.

Preferably, the time demodulator 53 is active both on amplitude-modulated pulses 100b and on amplitude-unmodulated pulses 100c.

Practically, once the sequence to be demodulated has been identified, the time demodulator 53 detects the time distance between each pulse of said sequence and the subsequent one, then retrieving the relevant information therefrom.

As above mentioned, the main signal 100 can be at least partly encrypted; the first key RN1 is obtained from the amplitude demodulation, while the second key RN2 is merely received in a plain form and therefore is immediately available to the receiver 50.

By inversely applying the encrypting algorithm applied by transmitter 10 but using the same keys RN1, RN2, the identification code ID incorporated into the main signal 100 can be obtained. Preferably the last-mentioned operation is performed by a decryption block 54 operatively associated with said amplitude demodulator 52 and time demodulator 53.

The identification code ID thus determined is compared, through a comparison unit 55 operatively associated with the demodulators 52, 53 and preferably connected to the decryption block 54, with one or more prestored parameters P.

Should the identification code ID be substantially the same as one of said prestored parameters P, the security system of the vehicle is deactivated through a suitable signal 102. If not, the user carrying the transmitter 10 with himself/herself is not considered authorised to use the vehicle and the security system keeps active.

Should operation of the transmitter 10 take place in the second operating mode, the receiver is able to recognise this condition due to the fact that the starting pulse of the auxiliary signal 101 has a predetermined time duration, as above stated.

The receiver 50 therefore puts itself in the condition of processing the received signal in an appropriate manner. In particular, if the auxiliary signal 101 is recognised, the third and fourth keys RN3, RN4 immediately available in plain form in the auxiliary signal 101 are read. Through keys RN3, RN4 the encrypted part of the auxiliary signal 101 is decrypted, so as to obtain a signal representative of the combination of the identification code ID and the variable code VC.

In order to be able to retrieve the identification code ID, the receiver 50 must have a register 56 in which the same values stored in the auxiliary register 44 of transmitter 10 are stored. In addition, the two devices (transmitter 10 and receiver 50) must be aligned, in terms of count of the variable codes, in such a manner that the receiver 50 uses for separation between the identification code ID and variable code VC, the same value as used by the combination block 41 for union of same.

To obtain a correct co-operation between transmitter 10 and receiver 50 the latter is designed to carry out a predetermined number of attempts with consecutive values (200, for example), starting from the last value used for a preceding decoding, so as to compensate for possible misalignments due to unintentional generation of an auxiliary signal, for example (e.g. accidental pressures on the command key by the user).

It is also provided that the transmitter 10, upon suitable command by the user, such as the continuous pressure of a key present on the transmitter 10 itself, for at least 7 seconds for example, should transmit a variable "resynchronisation" code, so as to reestablish alignment with the receiver 50. Preferably, said variable "resynchronisation" code is at least partly amplitude-modulated.

In the light of the above, it appears that a particularly advantageous sector for use of apparatus 1 is that of motor-vehicles and in particular motorcycles.

Activation of the security system can be obtained automatically, after a predetermined period of time (e.g. 30 seconds) from turning off of the vehicle in the absence of the main signal 100, i.e. in the absence of the transmitter 10 or in the presence of the transmitter 10 itself such set that the first operating mode is not active.

Alternatively, activation of the security system can be obtained in an immediate manner, following pressure of a key present on the transmitter 10. The security system can then be activated again through the transmitter 10 as above described, generating the main signal 100 or the auxiliary signal 101.

Advantageously, the security system may comprise an immobilisation block (also referred to as immobilizer) of the electric/electronic and/or mechanical type.

The security level in this context can be further increased by the fact that the immobilizer is unequivocally identified by the system and the receiver 50, so that unauthorised removal or replacement of this immobilizer does not in any case allow access and use of the vehicle.

It is further pointed out that division into the above described logical blocks and modules has been done to describe the functional character of apparatus 1 and does not necessarily reflect the hardware structure of the apparatus 1 itself.

The invention achieves important advantages.

First of all, the apparatus in accordance with the invention allows communication between transmitter and receiver through signals of substantially impossible recording and reproduction by means of mere recorders or similar devices.

In addition, both the transmitter and the receiver have a simple, cheap and not particularly complex (in terms of manufacture) circuit structure.

A further advantage resides in that, due to the logical structure of the generated signals, the transmitter is able to work with low power amounts, being therefore provided with great independence of operation in terms of power.

## Claims

1. A transmitter for remotely activating and/or deactivating security systems for vehicles, **characterised in that** it comprises:
- a module (20) for generation of a main signal (100), the latter including a succession of time- and amplitude-modulated signals (100a);
- transmission means (30) connected to said generation module (20) to send said main signal (100) to a security system of a vehicle operatively associated with said transmitter (10) to activate and/or deactivate said system.

2. A transmitter as claimed in claim 1, **characterised in that** only part of said pulses (100a) is amplitude-modulated.

3. A transmitter as claimed in claim 2, **characterised in that** said amplitude-modulated pulses (100b) are alternated with amplitude-unmodulated pulses (100c).

4. A transmitter as claimed in anyone of the preceding claims, **characterised in that** said amplitude-modulated pulses (100b) have at least two non-zero amplitudes, in which the ratio between said amplitudes is preferably included between 0.3 and 0.7.

5. A transmitter as claimed in anyone of the preceding claims, **characterised in that** the amplitude-modulated pulses (100b) substantially have the same time duration.

6. A transmitter as claimed in anyone of the preceding claims, **characterised in that** said amplitude-modulated pulses (100b) and the amplitude-unmodulated pulses (100c) are modulated in time.

7. A transmitter as claimed in anyone of the preceding claims, **characterised in that** said main signal (100) is a signal representative of an identification code (ID) of said transmitter (10).

8. A transmitter as claimed in anyone of the preceding claims, **characterised in that** said main signal (100) is at least partly encrypted with one or more keys (RN1, RN2).

9. A transmitter as claimed in claim 8, **characterised in that** said amplitude modulation is representative of at least one key (RN1) of said one or more keys (RN1, RN2).

10. A receiver for remotely activating and/or deactivating security systems for vehicles, **characterised in that** it comprises:
- reception means (51) to receive a main signal (100) incorporating an identification code (ID), said main signal (100) including a succession of time- and amplitude-modulated pulses (100a);
- an amplitude demodulator (52) operatively associated with said reception means (51);
- a time demodulator (53)operatively associated with said reception means (51) and said amplitude demodulator (52) to obtain said identification code (ID);
- a comparison unit (55) operatively associated with said demodulators (52, 53) to compare said identification code (ID) with at least one pre-stored parameter (P) and generate an activation and/or deactivation signal (102) for a security system of a vehicle, depending on said comparison.

11. A receiver as claimed in claim 10, **characterised in that** said amplitude demodulator (52) is only active on part of said pulses.

12. A receiver as claimed in claim 11, **characterised in that** said amplitude demodulator (52) comprises selection means (52a) for alternately selecting, in said succession of pulses (100a), those pulses (100b) on which said amplitude demodulator (52) is active.

13. A receiver as claimed in anyone of claims 10 to 12, **characterised in that** said amplitude demodulator (52) recognises at least two non-zero amplitudes of said pulses, the ratio between said amplitudes being preferably included between 0.3 and 0.7.

14. A receiver as claimed in anyone of claims 10 to 13, **characterised in that** said time demodulator (53) is active on the pulses (100b) on which said amplitude demodulator (52) is active and on pulses (100c) on which said amplitude demodulator (52) is not active.

15. A receiver as claimed in anyone of claims 10 to 14, **characterised in that** said main signal (100) is at least partly encrypted with one or more keys (RN1, RN2).

16. A receiver as claimed in claim 15, **characterised in that** said amplitude demodulator (52) outputs at least one first key (RN1) of said one or more keys (RN1, RN2).

17. A receiver as claimed in claim 15 or 16, **characterised in that** said main signal (100) contains a second key (RN2) transmitted in plain form.

18. A receiver as claimed in anyone of claims 15 to 17, **characterised in that** it comprises a decryption block (54) to decrypt the encrypted part of said main signal (100).

19. An apparatus for remotely activating and/or deactivating security systems for vehicles, **characterised in that** it comprises:
- a transmitter (10) as claimed in anyone of claims 1 to 9;
- a receiver (50) as claimed in anyone of claims 10 to 18.
